# EUROPÄISCHE PATENTSCHRIFT

(11) **EP 1 525 999 B1**
(45) Veröffentlichungstag und Bekanntmachung des Hinweises auf die Patenterteilung: **20.01.2010**
(21) Anmeldenummer: 04090100.1
(22) Anmeldetag: 11.03.2004
(51) Int. Cl.: B42D 3/12, B42D 3/04

(54) **Hülle für Vokabelhefte**
Jacket for a vocabulary booklet
Couverture pour un cahier de vocabulaire

(30) Priorität: 23.10.2003 DE 10350324
(43) Veröffentlichungstag der Anmeldung: 27.04.2005
(73) Patentinhaber: Veloflex Carsten Thormählen (GMBH & Co), 25337 Kölln-Reisiek (DE)
(72) Erfinder: Kauffrau, Monika Dormann, 25337 Elmshorn (DE)
(74) Vertreter: Grünecker, Kinkeldey, Stockmair & Schwanhäusser Anwaltssozietät

(56) Entgegenhaltungen:
- CH-A- 422 396
- DE-A- 10 046 390
- FR-A- 1 185 186
- GB-A- 508 570
- GB-A- 2 219 247
- US-A- 5 713 739

## Beschreibung

Die Erfindung betrifft eine Hülle für Vokabelhefte mit zwei über einen Rücken miteinander verbundenen, aus Kunststofffolie bestehenden Hüllendeckeln, an deren äußere Längsränder sich die Innenseiten der Hüllendeckel partiell überdeckende Folienstreifen anschließen, die zusammen mit den von ihnen überdeckten Teilen der Hüllendeckel Einschubtaschen für die Heftdeckel jeweils eines Vokabelheftes bilden.

Hüllen der vorstehenden Gattung werden von Schülern als Schutzumschläge für Hefte unterschiedlicher Art und Größe, d. h. unter anderem auch für Vokabelhefte verwendet, deren einzelne Seiten bekanntlich durch ein Längsstrich in eine rechte und linke Hälfte unterteilt sind. Beim Lernen von Vokabeln ist es üblich, vornehmlich die mit den zu lernenden fremdsprachlichen Wörtern beschriebenen Seitenhälften abzudecken, wozu in der Regel ein geeigneter Papier- oder Pappestreifen dient, der beim Einstudieren der einzelnen Vokabeln parallel zum Längsstrich verschoben wird. Die bekannte Lerntechnik vermag deshalb nicht voll zu befriedigen, weil der Abdeckstreifen leicht verrutscht und zudem häufig verloren geht.

Die besagten Nachteile weist beispielsweise auch die in der GB 2 219 247 A gezeigte Hülle auf. Die Einschubtaschen der Hülle nehmen zum Beispiel Deckel eines Buches auf, wodurch die Hülle und das Buch lösbar miteinander verbunden sind und die Hülle den Umschlag des Buches unter anderem gegen Verschmutzung schützen kann.

Auf den ins Innere des Buches weisenden Seiten der Einschubtaschen sind Aufnahmetaschen zur Aufnahme beispielsweise von Büchereiausweisen angeordnet. Diese sind jedoch zu klein, um Abdeckstreifen aufzunehmen, die ein Abdecken einer Hälfte der jeweiligen Seite gestatten.

Das Heft mit Spiralheftung der DE 100 46 390 A umfasst mit den Längsseiten der Heftdeckel verbundene Ansätze, die ins Innere des Heftes klappbar sind und die Abdeckstreifen zur Abdeckung eines Teils der jeweiligen Seite aufnehmen können. Jedoch können mit diesen Ansätzen nicht die inneren Spalten der Seiten abgedeckt werden. Um auch diese Bereiche der Seite abdecken zu können, zeigt diese Druckschrift eine in die Spiralheftung lösbar einsetzbare Schiene, die auch Abdeckstreifen aufnehmen kann. Diese Schiene kann ausschließlich mit Heften mit Spiralbindung verwendet werden und muss vor jedem Umblättern aus der Spiralheftung gelöst und nach dem Umblättern wieder eingehängt werden, wodurch der Vorgang unnötig verkompliziert wird.

Schließlich zeigt die FR-A-1 185 186 eine Schutzhülle für Hefte mit an den Längsrändern der Hüllendeckel angebrachten Laschen. Die Laschen sind so bemessen, dass mit ihnen jeweils eine Heftseite komplett abdeckbar ist. Abdeckstreifen können die Laschen nicht aufnehmen.

Der Erfindung liegt die Aufgabe zugrunde, die vorstehenden Unzulänglichkeiten zu eliminieren. Gelöst wird diese Aufgabe erfindungsgemäß dadurch, dass mit den äußeren Längsrändern (9, 10) der Hüllendeckel oder mit einem der äußeren Längsränder der Hüllendeckel insgesamt vier in das Innere des jeweiligen Vokabelheftes klappbare durchsichtige Einschubtaschen für Abdeckstreifen verbunden sind, durch die jeweils eine Hälfte jeweils einer Seite des Vokabelheftes abdeckbar ist.

Die erfindungsgemäße Hülle bietet den Vorteil, dass jeder Abdeckstreifen in den Einschubtaschen eine definierte Lage einnimmt und nicht ohne weiteres aus dem Heft herausfallen und verloren gehen kann. Benötigt werden jeweils vier Einschubtaschen und zwei Abdeckstreifen, um jeweils zwei Seitenhälften abzudecken.

Als besonders vorteilhaft erweist es sich, wenn die Einschubtaschen an ihrem oberen und unteren Ende offen sind und wenn sie im Bereich mindestens einer Einschuböffnung mit einer Ausstanzung versehen sind. In diesem Fall bilden die Einschubtaschen eine Führung für den jeweiligen Abdeckstreifen, der bequem von Zeile zu Zeile verlagert werden kann. Weitere Merkmale und Einzelheiten der Erfindung ergeben sich aus den Unteransprüchen und der nachstehenden Beschreibung dreier in den beigefügten Zeichnungen dargestellter Ausführungsformen der Erfindung. Es zeigen:
- Fig. 1: die perspektivische Darstellung einer Hülle mit jeweils zwei an ihren Außenrändern angeordneten Einschubtaschen,
- Fig. 2: die perspektivische Darstellung einer Hülle, bei der an einem Längsrand eine Einschubtasche und am anderen Längsrand drei Einschubtaschen angeordnet sind und
- Fig. 3: die perspektivische Darstellung einer Hülle, bei der am rechten Hüllenrand vier Einschubtaschen angeordnet sind.

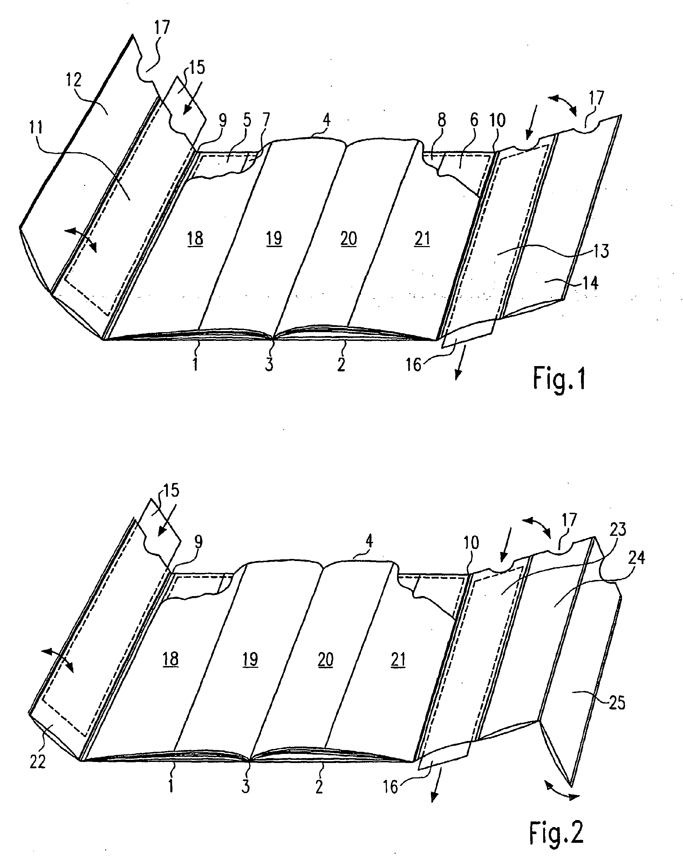

In Fig. 1 sind 1 und 2 zwei über einen Rücken 3 miteinander verbundene Hüllendeckel einer Hülle für ein Vokabelheft 4. Mit den Innenseiten der Hüllendeckel 1 und 2 sind zwei Folienstreifen 5 und 6 verbunden, die zusammen mit den Hüllendeckeln 1, 2 Einschubtaschen für die Deckel 7, 8 des Vokabelheftes 4 bilden.

An die äußeren Längsränder 9 und 10 der Hüllendeckel 1 und 2 schließen jeweils zwei in das Innere des Vokabelheftes 4 klappbare, durchsichtige Einschubtaschen 11,12 bzw. 13, 14 für zwei auswechselbare Abdeckstreifen 15, 16 an.

Die Einschubtaschen 11 bis 14 sind an ihren oberen und untern Enden offen und im Bereich der oberen Einschuböffnung mit jeweils einer Ausstanzung 17 versehen. Die Ausstanzung 17 ermöglicht es - wie anhand des Abdeckstreifens 16 in der Einschubtasche 13 dargestellt - das untere Ende des Abdeckstreifens 16 aus der Einschubtasche 13 herauszuschieben und anschließend zeilenweise weiter mit zwei, das untere Ende des Abdeckstreifens 16 erfassenden Fingern herauszuziehen.

Die Form und Größe der Einschubtaschen 11 bis 14 ist so gewählt, dass bei in das Innere des Vokabelheftes 4 geklappten Einschubtaschen die Einschubtasche 11 die linke Hälfte 18, die Einschubtasche 12 die rechte Hälfte 19, die Einschubtasche 14 die linke Hälfte 20 und die Einschubtasche 13 die rechte Hälfte 21 der jeweils aufgeschlagenen Seite des Vokabelheftes überdeckt.

Je nachdem, in welche Richtung, d. h. von der Muttersprache in die Fremdsprache oder umgekehrt, übersetzt werden soll, werden der Abdeckstreifen 15 entweder in die Einschubtasche 11 oder 12 und der Abdeckstreifen 16 entweder in die Einschubtasche 14 oder 13 eingeführt.

In Figur 2 ist eine als besonders ergonomisch erachtete Hülle dargestellt. Bei ihr ist am linken äußeren Längsrand 9 lediglich eine Einschubtasche 22 vorgesehen, während am rechten äußeren Längsrand 10 drei Einschubtaschen 23, 24 und 25 angebracht sind, von denen die äußere Einschubtasche 25 bei geschlossener Hülle auf die mittlere Einschubtasche 24 klappbar ist.

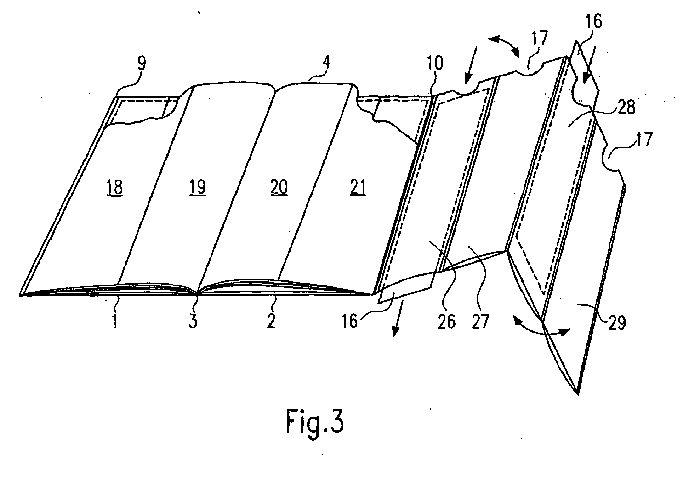

In Figur 3 ist schließlich eine Lösung gezeigt, bei der sämtliche Einschubtaschen 26, 27 28 und 29 mit dem rechten äußeren Längsrand 10 der Hülle verbunden sind.

## Patentansprüche

1. Hülle für Vokabelhefte (4) mit zwei über einen Rücken (3) miteinander verbundenen, aus Kunststofffolie bestehenden Hüllendeckeln (1, 2), an deren äußere Längsränder (9, 10) sich die Innenseiten der Hüllendeckel (1, 2) partiell überdeckende Folienstreifen (5, 6) anschließen, die zusammen mit den von ihnen überdeckten Teilen der Hüllendeckel (1, 2) Einschubtaschen für die Heftdeckel jeweils eines Vokabelheftes bilden, **dadurch gekennzeichnet, dass** mit den äußeren Längsrändern (9, 10) der Hüllendeckel (1, 2) oder mit einem der äußeren Längsränder (9, 10) der Hüllendeckel (1, 2) insgesamt vier in das Innere des jeweiligen Vokabelheftes (4) klappbare, durchsichtige Einschubtaschen (11-14; 22-25; 26-29) für Abdeckstreifen (15, 16) verbunden sind, durch die jeweils eine Hälfte (18 oder 19; 20 oder 21) jeweils einer Seite des Vokabelheftes (4) abdeckbar ist.

2. Hülle nach Anspruch 1, **dadurch gekennzeichnet, dass** mit jedem Längsrand (9, 10) der Hüllendeckel (1, 2) zwei parallel zueinander angeordnete Einschubtaschen (11, 12 bzw. 13, 14) verbunden sind.

3. Hülle nach Anspruch 1, **dadurch gekennzeichnet, dass** am Längsrand (9) des einen Hüllendeckels (1) eine Einschubtasche (22) und am Längsrand (10) des anderen Hüllendeckels (2) drei Einschubtaschen (23-25) angeordnet sind, von denen die dem Längsrand (10) abgewandte Einschubtasche (25) bei geschlossenem Vorkabelheft (4) auf die mittlere Einschubtasche (24) klappbar ist.

4. Hülle nach Anspruch 1, **dadurch gekennzeichnet, dass** am Längsrand (10) des einen Hüllendeckels (2) vier Einschubtaschen (26 - 29) angeordnet sind, von denen jeweils zwei einer Seite des Vokabelheftes (4) zugeordnet sind.

5. Hülle nach einem der Ansprüche 1 bis 4, **dadurch gekennzeichnet, dass** die Einschubtaschen (11-14; 22-25; 26-29) im Bereich mindestens einer Einschuböffnung mit einer Ausstanzung (17) versehen sind.

6. Hülle nach einem der Ansprüche 1 bis 5, **dadurch gekennzeichnet, dass** die Einschubtaschen (11-14; 22-25; 26-29) an ihrem oberen und unteren Ende offen sind.

## Claims

1. A vocabulary booklet jacket (4) having two jacket covers (1, 2) consisting of a synthetic material film and being mutually connected by a back (3), the outer long edges (9, 10) of which jacket covers being connected to film strips (5, 6) which partially cover the inner sides of the jacket covers (1, 2), which film strips together with the parts of the jacket covers (1, 2) which are covered by said film strips form insertion pockets for the booklet covers of a respective vocabulary booklet, **characterised in that** connected to the outer long edges (9, 10) of the jacket covers (1, 2) or to one of the outer long edges (9, 10) of the jacket covers (1, 2) is a total of four transparent insertion pockets (11-14; 22-25; 26-29) for cover strips (15, 16), which insertion pockets (11-14; 22-25; 26-29) can be folded into the inside of the respective vocabulary booklet (14), by means of which a respective half (18 or 19; 20 or 21) of a respective side of the vocabulary booklet (4) can be covered.

2. Jacket as claimed in claim 1, **characterised in that** two insertion pockets (11, 12 or 13, 14) which are mutually disposed in parallel are connected to each long edge (9, 10) of the jacket cover (1, 2).

3. Jacket as claimed in claim 1, **characterised in that** one insertion pocket (22) is disposed on the long edge (9) of one jacket cover (1) and three insertion pockets (23-25) are disposed on the long edge (10) of the other jacket cover (2), of which insertion pockets the insertion pocket (25) remote from the long edge (10) can be folded onto the middle insertion pocket (24) when the vocabulary booklet (14) is closed.

4. Jacket as claimed in claim 1, **characterised in that** four insertion pockets (26-29) are disposed on the long edge (10) of one jacket cover (2), two of which insertion pockets being allocated in each case to one side of the vocabulary booklet (4).

5. Jacket as claimed in any one of claims 1 to 4, **characterised in that** the insertion pockets (11-14; 22-25; 26-29) are provided with a cut-out (17) in the region of at least one insertion opening.

6. Jacket as claimed in any one of claims 1 to 5, **characterised in that** the insertion pockets (11-14; 22-25; 26-29) are open at their upper and lower ends.

## Revendications

1. Couverture pour des carnets de vocabulaire (4) comprenant deux abattants de couverture (1, 2) constitués d'une feuille en matière synthétique et reliés l'un à l'autre par un dos, aux bords longitudinaux externes desquels viennent se raccorder des bandes en feuilles (5, 6) recouvrant partiellement les côtés internes des abattants de couverture (1, 2), lesdites bandes formant, de manière conjointe avec les parties des abattants de couverture (1, 2) qui sont recouvertes par elles, des pochettes d'insertion pour les abattants de carnet respectivement d'un carnet de vocabulaire, **caractérisée en ce que**, sont reliées aux bords longitudinaux externes (9, 10) des abattants de couverture (1, 2) ou bien à un des bords longitudinaux externes (9, 10) des abattants de couverture (1, 2), au total quatre pochettes d'insertion (11 - 14 ; 22 - 25 ; 26 - 29), transparentes et rabattables à l'intérieur du carnet de vocabulaire respectif (4), pour des bandes de recouvrement (15, 16) par lesquelles respectivement une moitié (18 ou 19 ; 20 ou 21) respectivement d'un côté du carnet de vocabulaire (4) peut être recouvert.

2. Couverture selon la revendication 1, **caractérisée en ce que** deux pochettes d'insertion disposées parallèlement l'une à l'autre (11, 12 respectivement 13, 14) sont reliées à chaque bord longitudinal (9, 10) des abattants de couverture (1, 2).

3. Couverture selon la revendication 1, **caractérisée en ce qu'**une pochette d'insertion (22) vient se disposer contre le bord longitudinal (9) d'un abattant de couverture (1) et trois pochettes d'insertion (23 - 25) viennent se disposer contre le bord longitudinal (10) de l'autre abattant de couverture (2), la pochette d'insertion (25) qui se détourne du bord longitudinal (10) étant à même de se rabattre, lorsque le carnet de vocabulaire (4) est fermé, sur la pochette d'insertion médiane (24).

4. Couverture selon la revendication 1, **caractérisée en ce que** quatre pochettes d'insertion (26 - 29) sont disposées contre le bord longitudinal (10) d'un abattant de couverture (2), deux étant respectivement attribuées à un côté du carnet de vocabulaire (4).

5. Couverture selon l'une quelconque des revendications 1 à 4, **caractérisée en ce que** les pochettes d'insertion (11-14 ; 22-25 ; 26-29) sont munies d'une découpe (17) dans la zone d'au moins une ouverture d'insertion.

6. Couverture selon l'une quelconque des revendications 1 à 5, **caractérisée en ce que** les pochettes d'insertion (11-14 ; 22-25 ; 26-29) sont ouvertes à leur extrémité supérieure et à leur extrémité inférieure.
